(19) Europäisches Patentamt
European Patent Office
Office européen des brevets

(11) **EP 3 660 960 B1**

(12) **EUROPEAN PATENT SPECIFICATION**

(45) Date of publication and mention
of the grant of the patent:
**17.04.2024 Bulletin 2024/16**

(21) Application number: **18860585.1**

(22) Date of filing: **23.07.2018**

(51) International Patent Classification (IPC):
*H01M 4/14* (2006.01)     *H01M 4/62* (2006.01)

(52) Cooperative Patent Classification (CPC):
**H01M 4/627; H01M 4/14;** Y02E 60/10

(86) International application number:
**PCT/JP2018/027483**

(87) International publication number:
**WO 2019/064854 (04.04.2019 Gazette 2019/14)**

(54) **LEAD-ACID BATTERY**

BLEI-SÄURE-BATTERIE

BATTERIE AU PLOMB

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.09.2017 JP 2017187503
30.01.2018 JP 2018013777**

(43) Date of publication of application:
**03.06.2020 Bulletin 2020/23**

(73) Proprietor: **GS Yuasa International Ltd.
Kyoto-shi, Kyoto 601-8520 (JP)**

(72) Inventors:
• **NAGATO, Daisuke**
**Kosai-shi**
**Shizuoka 431-0452 (JP)**
• **ITO, Etsuko**
**Kosai-shi**
**Shizuoka 431-0452 (JP)**
• **AOYANAGI, Kiyomi**
**Kosai-shi**
**Shizuoka 431-0452 (JP)**
• **ANDO, Kazunari**
**Kosai-shi**
**Shizuoka 431-0452 (JP)**

(74) Representative: **Isarpatent
Patent- und Rechtsanwälte Barth
Charles Hassa Peckmann & Partner mbB
Friedrichstrasse 31
80801 München (DE)**

(56) References cited:
JP-A- H02 177 260     JP-A- 2001 220 114
JP-A- 2006 004 688     JP-A- 2006 004 688
JP-A- 2010 225 408     JP-A- 2010 225 408
JP-A- 2013 098 016     JP-A- 2014 197 546
JP-A- 2016 157 663     JP-A- 2017 174 791
JP-A- 2017 183 283

EP 3 660 960 B1

## Description

TECHNICAL FIELD

The technology disclosed in the present specification relates to a lead-acid battery.

BACKGROUND ART

Lead-acid batteries are widely used as secondary batteries. For example, the lead-acid battery is mounted on a vehicle such as an automobile, and is used as a power supply source for a starter at the time of an engine starting and a power supply source for various electric components such as lights.

The lead-acid battery includes a positive electrode plate and a negative electrode plate. The positive electrode plate and the negative electrode plate each include a current collector and an active material supported by the current collector.

Conventionally, there is known a technique in which a reinforcing short fiber is contained in an active material in order to improve life characteristics of a lead-acid battery by increasing strength of the active material (for example, see Patent Document 1).

PRIOR ART DOCUMENT

PATENT DOCUMENT

Patent Document 1: JP-A-2000-36 305

Patent Document 2: JP 2010 225408 A, discloses a lead-acid battery comprising a positive electrode active material with polyester-based or acrylic-based cut fiber additives to the positive electrode active material.

SUMMARY OF THE INVENTION

PROBLEMS TO BE SOLVED BY THE INVENTION

The inventors of the present application have made intensive studies and as a result newly found that by adopting a specific configuration as a configuration of a positive electrode material containing fibers, it is possible to effectively prevent the positive electrode material from falling off from a current collector and to dramatically improve the life characteristics of the lead-acid battery.

The present specification discloses a technique capable of effectively preventing the positive electrode material from falling off from the current collector in the positive electrode plate of the lead-acid battery and dramatically improving the life characteristics of the lead-acid battery.

MEANS FOR SOLVING THE PROBLEMS

The lead-acid battery disclosed in the present specification includes a positive electrode plate having a current collector and a positive electrode material supported by the current collector, and a negative electrode plate, wherein a total pore volume per unit mass of the positive electrode material is 0.167 $cm^3$/g or less, the positive electrode material contains fibers, and an average specific surface area of the fibers measured by a BET method using krypton gas as an adsorption gas is 0.25 $m^2$/g or more.

BRIEF DESCRIPTION OF THE DRAWINGS

Fig. 1 is a perspective view showing an appearance configuration of a lead-acid battery 100 in the present embodiment.
Fig. 2 is an explanatory view showing a Y-Z cross-sectional configuration of the lead-acid battery 100 taken along line II-II of Fig. 1.
Fig. 3 is an explanatory view showing a Y-Z cross-sectional configuration of the lead-acid battery 100 taken along line III-III of Fig. 1.
Fig. 4 is an explanatory view showing performance evaluation results.
Fig. 5 is an explanatory view showing performance evaluation results.

MODE FOR CARRYING OUT THE INVENTION

The technology disclosed in present specification may be implemented by the following aspects.
(1) The lead-acid battery disclosed in the present specification includes a positive electrode plate having a current collector and a positive electrode material supported by the current collector, and a negative electrode plate, wherein a total pore volume per unit mass of the positive electrode material is 0.167 $cm^3$/g or less, the positive electrode material contains fibers, and an average specific surface area of the fibers measured by a BET method using krypton gas as an adsorption gas is 0.25 $m^2$/g or more. The positive electrode plate includes the current collector and the positive electrode material. That is, the positive electrode material is obtained by removing the current collector from the positive electrode plate, and is generally called an "active material". The inventors of the present application have made intensive studies and as a result newly found that by adopting the configuration of the positive electrode material as described above, it is possible to effectively prevent the positive electrode material from falling off from the current collector in the positive electrode plate and to dramatically improve the life characteristics of the lead-acid battery.

That is, the specific surface area of the fiber contained in the positive electrode material has not been studied at all. Even if the specific surface area of the fiber contained in the positive electrode material is examined, an adsorption gas used for measuring the specific surface area of the fiber by the BET method is generally nitrogen gas. The inventor of the present application has newly found that, for various fibers, when nitrogen gas is used as an adsorption gas, even when there is no significant difference in measurement results of the specific surface area of the fibers, krypton gas is used as the adsorption gas to measure the specific surface area of the fiber, and when fibers whose average specific surface area thus measured is 0.25 $m^2$/g or more are selectively used, it is possible to effectively prevent the positive electrode material from falling off from the current collector in the positive electrode plate and to dramatically improve the life characteristics of the lead-acid battery.

However, if the total pore volume per unit mass of the positive electrode material is excessively large, a density of the positive electrode material is excessively low, and the positive electrode material is likely to be collapsed, so that the positive electrode material may not be able to be prevented from falling off from the current collector. The inventor of the present application has made intensive studies and as a result newly found that if the total pore volume per unit mass of the positive electrode material is 0.167 $cm^3$/g or less, the fibers whose average specific surface area measured by the BET method using krypton gas as an adsorption gas is 0.25 $m^2$/g or more are adopted as positive electrode fibers, so that it is possible to effectively prevent the positive electrode material from falling off from the current collector in the positive electrode plate and to dramatically improve the life characteristics of the lead-acid battery.

(2) In the above lead-acid battery, the total pore volume per unit mass of the positive electrode material may be 0.100 $cm^3$/g or more and 0.152 $cm^3$/g or less. It is considered that, if the total pore volume per unit mass of the positive electrode material is excessively small, the reactivity of the positive electrode material is excessively reduced, and as a result, the capacity characteristics of the lead-acid battery are deteriorated. On the other hand, in the present lead-acid battery, the total pore volume per unit mass of the positive electrode material is not excessively small, that is, 0.100 $cm^3$/g or more. Thus, according to the present lead-acid battery, it is possible to suppress the reduction in the reactivity of the positive electrode material, and to improve the capacity characteristics. In the present lead-acid battery, the total pore volume per unit mass of the positive electrode material is smaller, that is, 0.152 $cm^3$/g or less. Thus, according to the present lead-acid battery, it is possible to effectively suppress collapse of the positive electrode material, more effectively prevent the positive electrode material from falling off from the current collector in the positive electrode plate, and more dramatically improve the life characteristics of the lead-acid battery.

(3) In the above lead-acid battery, the total pore volume per unit mass of the positive electrode material may be 0.142 $cm^3$/g or more and 0.152 $cm^3$/g or less. According to the present lead-acid battery, since it is possible to very effectively suppress the reduction in the reactivity of the positive electrode material, it is possible to very effectively improve the capacity characteristics of the lead-acid battery while effectively preventing the positive electrode material from falling off from the current collector in the positive electrode plate and dramatically improving the life characteristics of the lead-acid battery.

(4) In the above lead-acid battery, the average specific surface area of the fibers measured by the BET method using krypton gas as an adsorption gas may be 0.50 $m^2$/g or more. The inventor of the present application has newly found that, for various fibers, krypton gas is used as an adsorption gas to measure the specific surface area of the fiber, and when fibers whose average specific surface area thus measured is 0.50 $m^2$/g or more are selectively used, it is possible to very effectively prevent the positive electrode material from falling off from the current collector in the positive electrode plate and to dramatically improve the life characteristics of the lead-acid battery.

(5) In the above lead-acid battery, the fiber may be an acrylic fiber. According to the present lead-acid battery, fibers whose average specific surface area measured by the BET method using krypton gas as an adsorption gas is 0.25 $m^2$/g or more can be easily obtained.

A. Embodiment:

A-1. Configuration:

(Configuration of lead-acid battery 100)

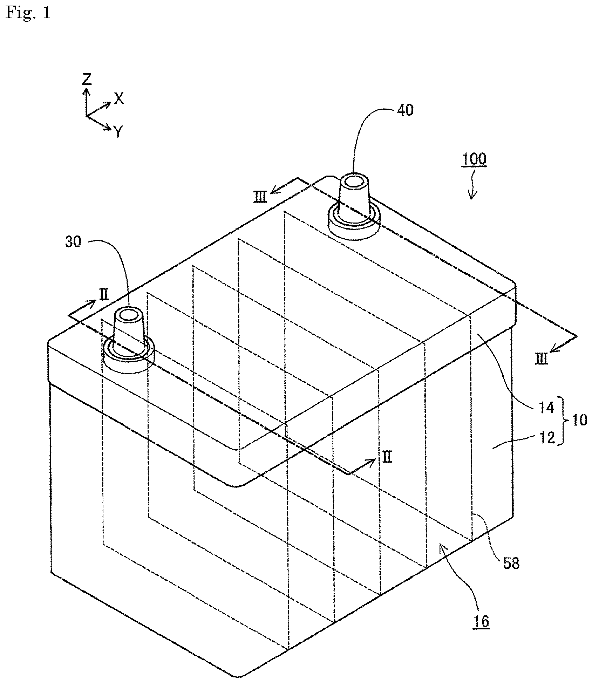

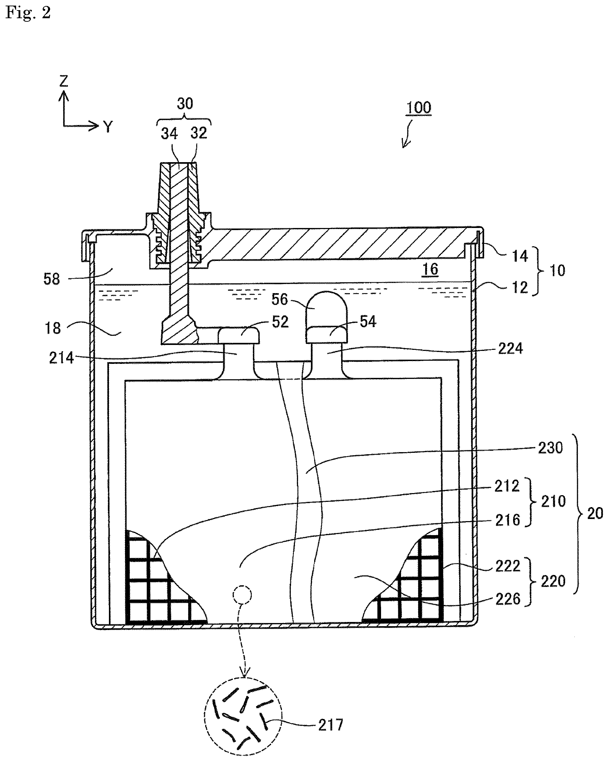

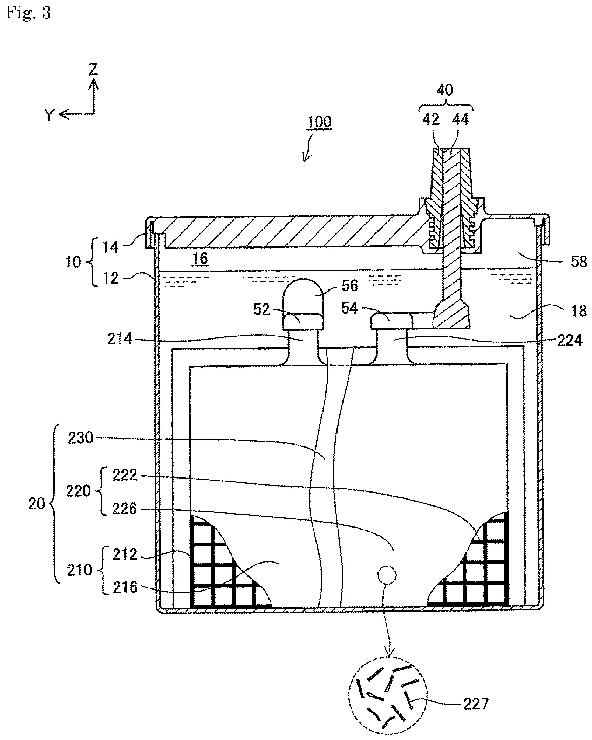

Fig. 1 is a perspective view showing an appearance configuration of a lead-acid battery 100 in the present embodiment. Fig. 2 is an explanatory view showing a Y-Z cross-sectional configuration of the lead-acid battery 100 taken along line II-II of Fig. 1. Fig. 3 is an explanatory view showing a Y-Z cross-sectional configuration of the lead-acid battery 100 taken along line III-III of Fig. 1. In Fig. 2 and Fig. 3, for convenience, as a configuration of an electrode plate group 20 described later is clearly shown, this configuration is represented in a form different from the actual configuration. Figs. 1 to 3 show mutually orthogonal X-axis, Y-axis, and Z-axis for specifying orientation. In the present specification, for the sake of convenience, the positive Z-axis direction is referred to as the "upward direction", and the negative Z-axis direction is referred to as the downward direction; however, in actuality, the lead-acid battery 100 may be disposed in a different orientation.

Since the lead-acid battery 100 can discharge a large current in a short time and, in addition, can exhibit stable performance under various environments, for example, the lead-acid battery 100 is mounted on a vehicle such as an automobile, and is used as a power supply source for a starter at the time of an engine starting and a power supply source for various electric components such as lights. As shown in Fig. 1 to Fig. 3, a lead-acid battery 100 includes a housing 10, a positive electrode-side terminal portion 30, a negative electrode-side terminal portion 40, and a plurality of the electrode plate groups 20. Hereinafter, the positive electrode-side terminal portion 30 and the negative electrode-side terminal portion 40 are also collectively referred to as "terminal portions 30 and 40".

(Configuration of housing 10)

The housing 10 has a container 12 and a lid 14. The container 12 is a substantially rectangular parallelepiped case having an opening on the upper surface and is formed of, for example, a synthetic resin. The lid 14 is a member disposed so as to close the opening of the container 12 and is formed of, for example, a synthetic resin. By bonding a peripheral edge portion of a lower surface of the lid 14 and a peripheral edge portion of the opening of the container 12 by, for example, heat welding, a space in which airtightness from the outside is maintained is formed in the housing 10. The space in the housing 10 is partitioned by a partition 58 into a plurality of (for example, six) cell chambers 16 arranged in a predetermined direction (the X-axis direction in the present embodiment). Hereinafter, the direction (the X-axis direction) in which the plurality of cell chambers 16 are arranged is referred to as "cell arrangement direction".

The single electrode plate group 20 is accommodated in each of the cell chambers 16 in the housing 10. Thus, for example, when the space in the housing 10 is partitioned into the six cell chambers 16, the lead-acid battery 100 includes the six electrode plate groups 20. Each of the cell chambers 16 in the housing 10 accommodates an electrolyte solution 18 containing dilute sulfuric acid, and the entire electrode plate group 20 is immersed in the electrolyte solution 18. The electrolyte solution 18 is injected into the cell chamber 16 from an electrolyte solution filling inlet (not shown) provided in the lid 14. The electrolyte solution 18 may contain aluminum ions in addition to diluted sulfuric acid.

(Configuration of electrode plate group 20)

The electrode plate group 20 includes a plurality of positive electrode plates 210, a plurality of negative electrode plates 220, and a separator 230. The plurality of positive electrode plates 210 and the plurality of negative electrode plates 220 are arranged such that the positive electrode plate 210 and the negative electrode plate 220 are alternately arranged. Hereinafter, the positive electrode plate 210 and the negative electrode plate 220 are also collectively referred to as "electrode plates 210 and 220".

The positive electrode plate 210 includes a positive electrode current collector 212 and a positive active material 216 supported by the positive electrode current collector 212. The positive electrode current collector 212 is a conductive member having bones arranged in a substantially lattice or mesh shape, and is formed of, for example, lead or a lead alloy. Furthermore, the positive electrode current collector 212 has near the upper end thereof a positive electrode lug portion 214 protruding upward. The positive active material 216 contains lead dioxide and positive electrode fibers 217 described later. The positive active material 216 may further include other known additives. The positive electrode plate 210 having such a configuration can be produced by, for example, applying or filling a paste for the positive active material mainly composed of lead monoxide, water, and sulfuric acid on or in the positive electrode current collector 212, drying the paste for the positive active material, and then performing a known chemical conversion treatment. The positive active material 216 in the present embodiment is obtained by removing the positive electrode current collector 212 from the positive electrode plate 210, and corresponds to a positive electrode material in the claims.

The negative electrode plate 220 includes a negative electrode current collector 222 and a negative active material 226 supported by the negative electrode current collector 222. The negative electrode current collector 222 is a conductive member having bones arranged in a substantially lattice or mesh shape, and is formed of, for example, lead or a lead alloy. Furthermore, the negative electrode current collector 222 has near the upper end thereof a negative electrode lug portion 224 protruding upward. The negative active material 226 contains lead (spongy lead) and a negative electrode fiber 227 described later. The negative active material 226 may further contain other known additives (for example, carbon, lignin, barium sulfate, and the like). The negative electrode plate 220 having such a configuration can be produced by, for example, applying or filling a paste for the negative active material containing lead on or in the negative electrode current collector 222, drying the paste for the negative active material, and then performing a known chemical conversion treatment.

The separator 230 is formed of an insulating material (for example, glass or synthetic resin). The separator 230 is disposed so as to be interposed between the positive electrode plate 210 and the negative electrode plate 220 adjacent to each other. The separator 230 may be configured as an integral member, or may be configured as a set of a plurality of members provided for each combination of the positive electrode plate 210 and the negative electrode plate 220.

The positive electrode lug portions 214 of the plurality of positive electrode plates 210 constituting the electrode plate group 20 are connected to a positive electrode-side strap 52 formed of, for example, lead or a lead alloy. That is, the plurality of positive electrode plates 210 are electrically connected in parallel via the positive electrode-side strap 52. Similarly, the negative electrode lug portions 224 of the plurality of negative electrode plates 220 constituting the electrode plate group 20 are connected to a negative electrode-side strap 54 formed of, for example, lead or a lead alloy. That is, the plurality of negative electrode plates 220 are electrically connected in parallel via the negative electrode-side strap 54. Hereinafter, the positive electrode-side strap 52 and the negative electrode-side strap 54 are also collectively referred to as "straps 52 and 54".

In the lead-acid battery 100, the negative electrode-side strap 54 accommodated in one cell chamber 16 is connected to the positive electrode-side strap 52 accommodated in the other cell chamber 16 adjacent to one side (for example, the positive X-axis direction side) of the one cell chamber 16 via a connecting member 56 formed of, for example, lead or a lead alloy. The positive electrode-side strap 52 accommodated in the one cell chamber 16 is connected to the negative electrode-side strap 54 accommodated in the other cell chamber 16 adjacent to the other side (for example, the negative X-axis direction side) of the one cell chamber 16 via the connecting member 56. That is, the plurality of electrode plate groups 20 included in the lead-acid battery 100 are electrically connected in series via the straps 52 and 54 and the connecting member 56. As shown in Fig. 2, the positive electrode-side strap 52 accommodated in the cell chamber 16 located at an end on one side (negative X-axis direction side) in the cell arrangement direction is connected to not the connecting member 56, but a positive electrode pole 34 described later. As shown in Fig. 3, the negative electrode-side strap 54 accommodated in the cell chamber 16 located at an end on the other side (positive X-axis direction side) in the cell arrangement direction is connected to not the connecting member 56, but a negative electrode pole 44 described later.

(Configuration of terminal portions 30 and 40)

The positive electrode-side terminal portion 30 is disposed near the end on one side (negative X-axis direction side) in the cell arrangement direction in the housing 10, and the negative electrode-side terminal portion 40 is disposed near the end on the other side (positive X-axis direction side) in the cell arrangement direction in the housing 10.

As shown in Fig. 2, the positive electrode-side terminal portion 30 includes a positive electrode-side bushing 32 and the positive electrode pole 34. The positive electrode-side bushing 32 is a substantially cylindrical conductive member having a hole penetrating vertically, and is formed of, for example, a lead alloy. A lower portion of the positive electrode-side bushing 32 is embedded in the lid 14 by insert molding, and an upper portion of the positive electrode-side bushing 32 protrudes upward from an upper surface of the lid 14. The positive electrode pole 34 is a substantially cylindrical conductive member, and is formed of, for example, a lead alloy. The positive electrode pole 34 is inserted into a hole of the positive electrode-side bushing 32. An upper end of the positive electrode pole 34 is located at substantially the same position as an upper end of the positive electrode-side bushing 32, and is bonded to the positive electrode-side bushing 32 by, for example, welding. A lower end of the positive electrode pole 34 protrudes downward from a lower end of the positive electrode-side bushing 32, and further protrudes downward from the lower surface of the lid 14 and, as described above, is connected to the positive electrode-side strap 52 accommodated in the cell chamber 16 located at the end on one side (negative X-axis direction side) in the cell alignment direction.

As shown in Fig. 3, the negative electrode-side terminal portion 40 includes a negative electrode-side bushing 42 and the negative electrode pole 44. The negative electrode-side bushing 42 is a substantially cylindrical conductive member having a hole penetrating vertically, and is formed of, for example, a lead alloy. A lower portion of the negative electrode-side bushing 42 is embedded in the lid 14 by insert molding, and an upper portion of the negative electrode-side bushing 42 protrudes upward from an upper surface of the lid 14. The negative electrode pole 44 is a substantially cylindrical conductive member, and is formed of, for example, a lead alloy. The negative electrode pole 44 is inserted into a hole of the negative electrode-side bushing 42. An upper end of the negative electrode pole 44 is located at substantially the same position as an upper end of the negative electrode-side bushing 42, and is bonded to the negative electrode-side bushing 42 by, for example, welding. A lower end of the negative electrode pole 44 protrudes downward from a lower end of the negative electrode-side bushing 42, and further protrudes downward from the lower surface of the lid 14 and, as described above, is connected to the negative electrode-side strap 54 accommodated in the cell chamber 16 located at the end on the other side (positive X-axis direction side) in the cell alignment direction.

When the lead-acid battery 100 is discharged, a load (not shown) is connected to the positive electrode-side bushing 32 of the positive electrode-side terminal portion 30 and the negative electrode-side bushing 42 of the negative electrode-side terminal portion 40. An electric power generated by the reaction (reaction in which lead sulfate is generated from lead dioxide) at the positive electrode plate 210 of each of the electrode plate groups 20 and the reaction (reaction in which lead sulfate is generated from lead (spongy lead)) at the negative electrode plate 220 is supplied to the load. When the lead-acid battery 100 is charged, a power source (not shown) is connected to the positive electrode-side bushing 32 of the positive electrode-side terminal portion 30 and the negative electrode-side bushing 42 of the negative electrode-side terminal portion 40. The reaction (reaction in which lead dioxide is generated from lead sulfate) at the positive electrode plate 210 of each of the electrode plate groups 20 and the reaction (reaction in which lead (spongy lead) is generated from lead sulfate) at the negative electrode plate 220 occur, and the lead-acid battery 100 is charged.

A-2. Detailed configuration of positive active material 216:

As shown in Fig. 2, in the lead-acid battery 100 of the present embodiment, the positive active material 216 contains the fibers (hereinafter, referred to as "positive electrode fibers") 217 in addition to lead dioxide. In the present embodiment, an average specific surface area of the positive electrode fibers 217, which is measured by a BET method using krypton gas as an adsorption gas (hereinafter, this average specific surface area is also simply referred to as "average specific surface area of the positive electrode fibers 217"), is 0.25 $m^2$/g or more. The average specific surface area of the positive electrode fibers 217, which is measured by the BET method using krypton gas as an adsorption gas, is more preferably 0.50 $m^2$/g or more. Since the krypton gas has a lower saturated vapor pressure than that of, for example, nitrogen gas, if the krypton gas is used as an adsorption gas for measuring the specific surface area by the BET method, a relatively low specific surface area can be measured with high accuracy. For example, if the krypton gas is used as an adsorption gas, a surface area of a fine wrinkle on a surface of the positive electrode fiber 217, which is difficult to measure when using nitrogen gas, can be measured with high accuracy. Thus, for various fibers, even if there is no significant difference in measurement results of the specific surface area of the fibers when nitrogen gas is used as an adsorption gas, when krypton gas is used as the adsorption gas, a significant difference may be grasped in the measurement results of the specific surface area of the fibers.

The positive electrode fiber 217 is, for example, an acrylic fiber, a polypropylene fiber, a polyester fiber, a polyethylene fiber, a PET fiber, or a rayon fiber. Acrylic fibers are produced by wet spinning in which a polymer is dissolved in a solvent and fibers are spun in a liquid called a coagulant. At this time, a fiber portion and a solvent portion are separated (segregated), and a portion from which the solvent portion is removed appears as a wrinkle. Thus, generally, many fine wrinkles are formed on the surface of the acrylic fiber. Therefore, it is preferable to use an acrylic fiber as the positive electrode fiber 217 because it is possible to easily obtain the positive electrode fibers 217 whose average specific surface area measured by the BET method using krypton gas as an adsorption gas is within the above numerical range. When an acrylic fiber is used as the positive electrode fiber 217, the average specific surface area of the positive electrode fibers 217 measured by the BET method using krypton gas as an adsorption gas can be increased to

about 0.60 $m^2$/g or more.

In the lead-acid battery 100 of the present embodiment, a total pore volume per unit mass of the positive active material 216 is 0.167 $cm^3$/g or less. The total pore volume per unit mass of the positive active material 216 is more preferably 0.100 $cm^3$/g or more and 0.152 $cm^3$/g or less, still more preferably 0.142 $cm^3$/g or more and 0.152 $cm^3$/g or less. The total pore volume per unit mass of the positive active material 216 can be adjusted by changing a formulation (a mixing ratio of lead powder, water, and dilute sulfuric acid) when preparing the positive active material 216. For example, when the mixing ratio of dilute sulfuric acid and water is increased, the total pore volume per unit mass of the positive active material 216 increases.

In the following description, such a condition that the total pore volume per unit mass of the positive active material 216 is 0.167 $cm^3$/g or less, the positive active material 216 contains the positive electrode fibers 217, and the average specific surface area of the positive electrode fibers 217 measured by the BET method using krypton gas as an adsorption gas is 0.25 $m^2$/g or more is referred to as "specific condition regarding the positive active material".

In the positive electrode fibers 217 contained in the positive active material 216 constituting the positive electrode plate 210 of the lead-acid battery 100, the average specific surface area measured by the BET method using krypton gas as an adsorption gas is specified as follows.

(1) The lead-acid battery 100 is disassembled, and the positive electrode plate 210 is collected.
(2) The collected positive electrode plate 210 is washed with water to remove sulfuric acid.
(3) The positive active material 216 is collected from the positive electrode plate 210.
(4) The collected positive active material 216 is dissolved in a mixed solution of nitric acid and hydrogen peroxide.
(5) The solution of (4) is filtered.
(6) About 0.4 g of sample (fiber) from a residue on filter paper is sampled.
(7) The specific surface area of each fiber is measured by the BET method using krypton gas as an adsorption gas, using a specific surface area measuring device (Tristar II 3020 series manufactured by Shimadzu Corporation).
(8) The average specific surface area of each fiber is calculated.

The total pore volume per unit mass of the positive active material 216 constituting the positive electrode plate 210 of the lead-acid battery 100 is specified as follows.

(1) The lead-acid battery 100 is disassembled, and the positive electrode plate 210 is collected.

(2) The collected positive electrode plate 210 is washed with water to remove sulfuric acid.

(3) About 1 g of a sample (the positive active material 216) is collected from the positive electrode plate 210.

(4) The total pore volume of the collected positive active material 216 is measured by a mercury porosimetry using a mercury porosimeter (Autopore IV9500 series manufactured by Shimadzu Corporation).

(5) An average value of the measured values of the total pore volumes of the positive active materials 216 is defined as the total pore volume per unit mass of the positive active material 216.

A-3. Performance evaluation:

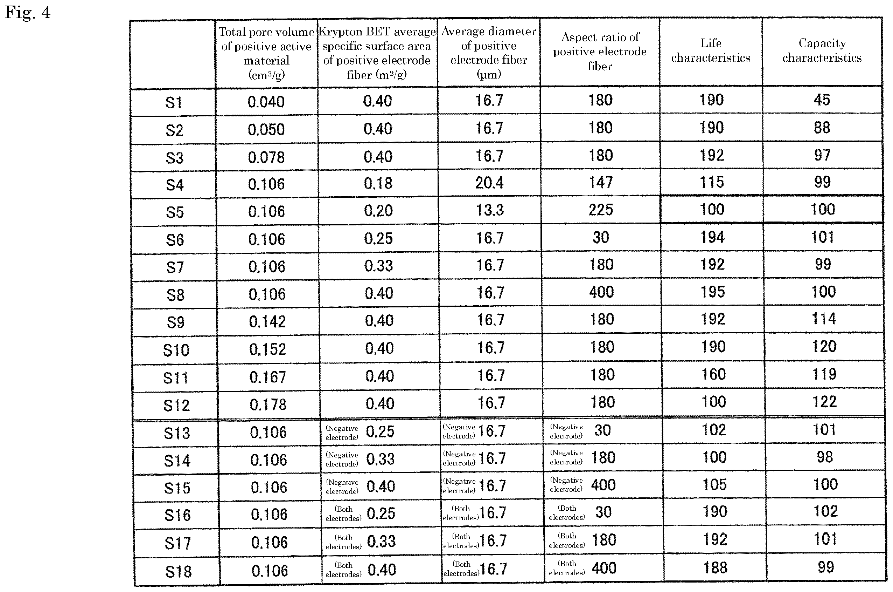

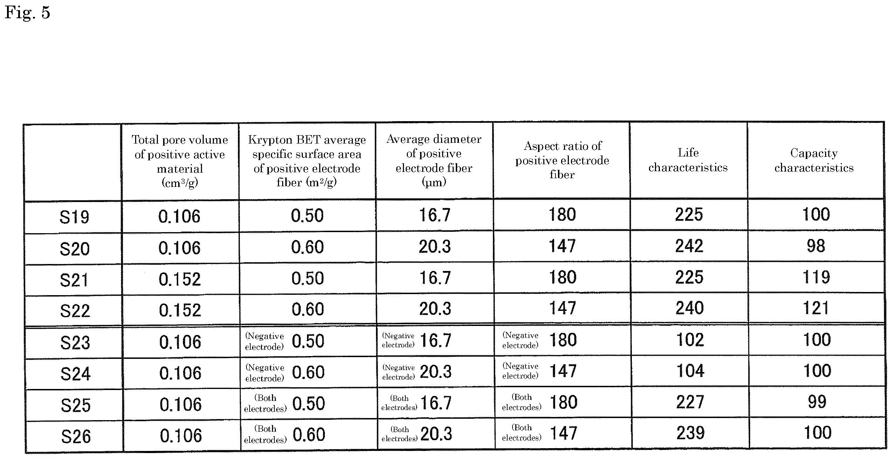

A plurality of samples (S1 to S26) of a lead-acid battery were prepared, and performance evaluation was performed on the samples. Figs. 4 and 5 are explanatory views showing performance evaluation results.

A-3-1. Each sample:

As shown in Figs. 4 and 5, each sample has a different total pore volume of the positive active material.

In the samples S1 to S12 and S19 to S22, similarly to the lead-acid battery 100 of the above embodiment, the positive active material contains the positive electrode fibers. In the samples S1 to S4, S6 to S12, and S19 to S22, an acrylic fiber is used as the positive electrode fiber, and in the sample S5, a PET fiber is used as the positive electrode fiber. In the samples S 1 to S12 and S19 to S22, a content ratio of the positive electrode fiber in the positive active material is 0.05% by mass (wt%) to 0.40% by mass. The samples S1 to S12 and S19 to S22 differ from each other in the average specific surface area of the positive electrode fibers measured by the BET method using krypton gas as an adsorption gas.

As shown in Fig. 4, the samples S1 to S12 are arranged in ascending order of the total pore volume of the positive active material, and, in addition, the samples (samples S4 to S8) in which the total pore volume of the positive active material is the same are arranged in ascending order of the average specific surface area of the positive electrode fibers. The samples S19 to S22 shown in Fig. 5 are also arranged in the same order.

The samples S 1 to S3, S6 to S11, and S19 to S22 satisfy the specific condition regarding the positive active material (such a condition that the total pore volume per unit mass of the positive active material is 0.167 $cm^3/g$ or less, the positive active material contains the positive electrode fibers, and the average specific surface area of the positive electrode fibers measured by the BET method using krypton gas as an adsorption gas is 0.25 $m^2/g$ or more), which is satisfied by the lead-acid battery 100 of the above embodiment.

On the other hand, the samples S4, S5, and S12 do not satisfy the specific condition regarding the positive active material described above. Specifically, in the sample S12, the total pore volume per unit mass of the positive active material is relatively large of 0.178 $cm^3/g$. In the samples S4 and S5, the average specific surface area of the positive electrode fibers is relatively small of 0.18 $m^2/g$ or 0.20 $m^2/g$.

Figs. 4 and 5 show the average diameter and aspect ratio (ratio of average length L to average diameter W of fibers (= L/W)) of the positive electrode fiber for each sample.

In the samples S1 to S12 and S19 to S22, the negative active material constituting the negative electrode plate contains, as the negative electrode fibers, PET fibers whose average specific surface area measured by the BET method using krypton gas as an adsorption gas is 0.20 $m^2/g$.

As shown in Figs. 4 and 5, in the samples S13 to S15, S23, and S24, acrylic fibers whose average specific surface area measured by the BET method using krypton gas as an adsorption gas is 0.25 $m^2/g$ or more are used as the negative electrode fibers contained in the negative active material constituting the negative electrode plate. In the samples S13 to S15, S23, and S24, the positive active material constituting the positive electrode plate contains, as the positive electrode fibers, PET fibers whose average specific surface area measured by the BET method using krypton gas as an adsorption gas is 0.20 $m^2/g$. That is, the samples S13 to S15, S23, and S24 do not satisfy the specific condition regarding the positive active material described above.

As shown in Figs. 4 and 5, in the samples S16 to S18, S25, and S26, acrylic fibers whose average specific surface area measured by the BET method using krypton gas as an adsorption gas is 0.25 $m^2/g$ or more are used as both the positive electrode fibers contained in the positive active material constituting the positive electrode plate and the negative electrode fibers contained in the negative active material constituting the negative electrode plate. That is, the samples S16 to S18, S25, and S26 satisfy the specific condition regarding the positive active material described above.

A method for preparing each sample is as follows.

(1) Production of positive electrode plate

A raw material lead powder (a mixture of lead oxide mainly composed of lead and lead monoxide), water, diluted sulfuric acid (density of 1.40 $g/cm^3$), and synthetic resin fibers cut to a predetermined length (hereinafter, referred to as "positive electrode fiber") were mixed to obtain a paste for the positive active material.

It is known that the density of the positive active material can be changed by changing a mixing ratio of dilute sulfuric acid and water, and the positive active material used in this performance evaluation is also realized by changing the mixing ratio of dilute sulfuric acid and water.

The following fibers were used as the positive electrode fibers.

- Samples S5, S13 to S15, S23, and S24: Trade name "Tetron" (PET manufactured by Toray: polyester fiber)
- Sample S4: Trade name "Vonnel" (acrylic fiber manufactured by Mitsubishi Rayon Co., Ltd.)
- Samples other than the above samples: Acrylic fiber of the present embodiment

A lead sheet formed of a ternary alloy of lead, calcium, and tin (hereinafter, referred to as a "Pb-Ca-Sn alloy") was subjected to an expanding process, and then a positive electrode grid (positive electrode current collector) was produced.

By filling the paste for the positive active material in an expanded mesh of the positive electrode current collector and aging and drying the paste by a conventional method, an unformed positive electrode plate (height: 115 mm, width: 137.5 mm, thickness: 1.5 mm) was obtained.

(2) Production of negative electrode plate

A raw material lead powder (a mixture of lead oxide mainly composed of lead and lead monoxide), water, diluted sulfuric acid (density of 1.40 g/cm$^3$), synthetic resin fibers cut to a predetermined length (hereinafter, referred to as "negative electrode fiber"), and a predetermined ratio of a negative electrode additive (lignin, carbon, barium sulfate) were mixed to obtain a paste for the negative active material.

The following fibers were used as the negative electrode fibers.

- Samples S1 to S12 and S19 to S22: Trade name "Tetron" (PET manufactured by Toray: polyester fiber)
- Samples S13 to S18, S23 to S26: In the same manner as an acrylic fiber positive electrode grid (positive electrode current collector) of the present embodiment, a plate lead sheet formed of a Pb-Ca-Sn alloy was subjected to an expanding process, and then a negative electrode grid (negative electrode current collector) was produced.

By filling the paste for the negative active material in an expanded mesh of the negative electrode current collector and, similar to the positive electrode plate, aging and drying the paste by a conventional method, an unformed negative electrode plate (height: 115 mm, width: 137.5 mm, thickness: 1.3 mm) was obtained.

(3) Production of sample battery

Using the positive electrode plate and the negative electrode plate produced in the above (1) and (2), the negative electrode plate was bagged or pouched with a polyethylene separator, and then the positive electrode plate and the bagged or pouched negative electrode plate were alternately stacked. Then, a plurality of the positive electrode plates are welded to each other with leaded components, and a plurality of the negative electrode plates were welded to each other with leaded components, thus producing an electrode plate group.

The electrode plate group was inserted into a resin (polypropylene) container so that six cells were connected in series, the electrode plate groups (five locations) were subjected to intercell welding, and then a resin (polypropylene) lid and the container were bonded. Then, both terminal portions (positive and negative electrode terminal portions) were welded to produce a sample battery.

Thereafter, the battery was initially charged by a conventional method, and then a sample battery having an electrolyte density of 1.285 was obtained.

A-3-2. Evaluation items and evaluation methods:

Using each sample of the lead-acid battery, two items including life characteristics (idling stop life characteristics) and capacity characteristics (20-hour rate capacity characteristics) were evaluated.

The life characteristics were evaluated as follows. That is, a life test was performed on each sample of the lead-acid battery by a method including the following steps a) to e), and the number of cycles (life cycle number) at the end of the test was obtained. Assuming that the life cycle number in the sample S5 was 100 (indicated by a thick line in Fig. 4), the life cycle number in each sample was represented by a relative value. In this evaluation, like a lead-acid battery for a vehicle having an idling stop function, a charge-discharge cycle in PSOC (Partial State of Charge, incompletely charged state) is repeated, and therefore, it is possible to evaluate the life characteristics of the lead-acid battery in a condition that the positive electrode plate is likely to be softened.

a) The sample is placed in a gas phase at 25 ±2°C throughout the entire test period. A wind speed near the sample shall be 2.0 m/s or less.

b) The sample is connected to a life test apparatus, and the following discharge ("discharge 1" and "discharge 2") and charge cycles are continuously repeated. The discharge and charge cycle is defined as one cycle of the life.

- Discharge 1: 59.0 ±0.2 seconds at a discharge current of 28 ±1 A
- Discharge 2: 1.0 ±0.2 seconds at a discharge current of 300 ± 1 A

- Charge: 60.0 ±0.3 seconds at a charge voltage of 14.00 ±0.03 V (current limit of 100.0 ±0.5 A)

During the test, a final discharge voltage of "discharge 2" is measured.

c) During the test, after the sample is left for 40 to 48 hours by each 3,600 times, the cycle is started again. d) The test is terminated when it is confirmed that a voltage upon discharge has reached less than 7.2 V during the test.

e) Water is not added up to 30,000 times.

The capacity characteristics were evaluated as follows. That is, for each sample of the lead-acid battery, a 20-hour rate capacity was measured by a method including the following steps a) to d), and assuming that the 20-hour rate capacity in the sample S5 was 100 (indicated by a thick line in Fig. 4), the 20-hour rate capacity in each sample was represented by a relative value.

a) The sample is charged at a current of 3.42 times a 20-hour rate current $I_{20}$ until a terminal voltage during charge measured every 15 minutes or an electrolyte density in terms of temperature shows a constant value three times in succession. An electrolyte surface is filled up to a maximum liquid surface.

The temperature conversion of the electrolyte density is based on the following equation:

$$D_{20} = D_T + 0.0007(T - 20)$$

where $D_{20}$: Density (g/cm$^3$) of electrolyte solution at 20°C

$D_T$: Density (g/cm$^3$) of electrolyte solution at T°C
T: Temperature (°C) of electrolyte solution when density is measured

b) The sample is placed in a water tank at 25 ±2°C throughout the entire test period. The water surface shall be between 15 and 25 mm downward from an upper surface of the sample. When a plurality of samples are placed in the same water tank, a distance between the samples and a distance to the water tank wall shall be at least 25 mm.

c) After 1 to 5 hours from completion of charge according to a), it is confirmed that the electrolyte temperature is 25 ±2°C. Thereafter, the sample is discharged at a 20-hour rate current $I_{20}$ until the terminal voltage drops to 10.50 ± 0.05 V, and a discharge duration time t is recorded.

d) An effective 20-hour rate capacity $C_{20,e}$ (Ah) of a storage battery is calculated by the following equation:

$$C_{20,e} = I_{20} \times t$$

where $I_{20}$: 20-hour rate current (A)
t: Discharge duration time (hour)

A-3-3. Evaluation results:

As shown in Figs. 4 and 5, in all the samples S1 to S3, S6 to S11, and S19 to S22 satisfying the above-described specific condition regarding the positive active material (such a condition that the total pore volume per unit mass of the positive active material is 0.167 cm$^3$/g or less, the positive active material contains the positive electrode fibers, and the average specific surface area of the positive electrode fibers measured by the BET method using krypton gas as an adsorption gas is 0.25 m$^2$/g or more), in the evaluation of the life characteristics, the result was "160" or more, and the life characteristics were dramatically improved as compared to the evaluation result "100" of the life characteristics of the sample S5.

On the other hand, in the samples S4 and S5 not satisfying the specific condition regarding the positive active material because the average specific surface area of the positive electrode fibers is less than 0.25 m$^2$/g, in the evaluation of the life characteristics, a not-good result was obtained such that the value was "115" or less. In the samples S4 and S5, it is considered that since the average specific surface area of the positive electrode fibers is excessively small, the positive electrode fiber does not adhere well to other components in the positive active material, and a restraining force of the positive active material by the positive electrode fiber is reduced, so that the positive active material cannot be effectively prevented from falling off from the current collector, and the life characteristics are deteriorated.

In the sample S 12 not satisfying the specific condition regarding the positive active material because the total pore volume per unit mass of the positive active material exceeded 0.167 cm$^3$/g, in the evaluation of the life characteristics, a not-good result was obtained such that the value was "100". In the sample S12, the total pore volume per unit mass of the positive active material is excessively large. That is, in the sample S12, the density of the positive active material is excessively low, and the positive active material is likely to be collapsed. Thus, in the sample S12, it is considered that despite the fact that the average specific surface area of the positive electrode fibers is 0.25 m$^2$/g or more, and the positive electrode fiber adheres well to other components in the positive active material, the positive active material is collapsed due to repeated charge and discharge of the lead-acid battery and falls from the current collector, and the life characteristics are deteriorated.

As described above, according to this performance evaluation, it has been confirmed that if the lead-acid battery satisfies the above-described specific condition regarding the positive active material (such a condition that the total pore volume per unit mass of the positive active material is 0.167 cm$^3$/g or less, the positive active material contains the positive electrode fibers, and the average specific surface area of the positive electrode fibers measured by the BET method using krypton gas as an adsorption gas is 0.25 $m^2$/g or more), it is possible to effectively prevent the positive active material (positive electrode material) from falling off from the positive electrode current collector in the positive electrode plate and to dramatically improve the life characteristics of the lead-acid battery.

In the samples S13 to S15, S23, and S24 in which acrylic fibers whose average specific surface area measured by the BET method using krypton gas as an adsorption gas is 0.25 $m^2$/g or more are used as the negative electrode fiber contained only in the negative active material constituting the negative electrode plate, neither the life characteristics nor the capacity characteristics were good. On the other hand, in the samples S16 to S18, S25, and S26 in which the acrylic fibers whose average specific surface area measured by the BET method using krypton gas as an adsorption gas was 0.25 $m^2$/g or more were used as both the positive electrode fibers contained in the positive active material constituting the positive electrode plate and the negative electrode fibers contained in the negative active material constituting the negative electrode plate, both the life characteristics and the capacity characteristics were equal to those of the samples S1 to S3, S6 to S11, and S19 to S22. According to this result, it can be said that by using, as at least the positive electrode fibers, fibers whose average specific surface area measured by the BET method using krypton gas as an adsorption gas is 0.25 $m^2$/g or more, in particular, in a condition that the positive electrode plate is likely to be softened because the charge-discharge cycle in PSOC is repeated, the life characteristics of the lead-acid battery can be dramatically improved.

In this performance evaluation, among the samples S1 to S3, S6 to S11, and S19 to S22 with good results, in the samples S6 to S10 and S19 to S22, the total pore volume per unit mass of the positive active material is 0.100 $cm^3$/g or more and 0.152 $cm^3$/g or less. In all these samples, in the evaluation of the life characteristics, a better result was obtained such that the value was "190" or more, and in the evaluation of the capacity characteristics, a good result was obtained such that the value was "98" or more. According to this result, it can be said that in the lead-acid battery, if the above-described specific condition regarding the positive active material is satisfied, and the total pore volume per unit mass of the positive active material is 0.100 $cm^3$/g or more and 0.152 $cm^3$/g or less, reactivity of the positive active material is excessively reduced by an excessive reduction in the total pore volume per unit mass of the positive active material, so that deterioration of the capacity characteristics can be suppressed, and, at the same time, the density of the positive active material is excessively reduced by an excessive increase in the total pore volume per unit mass of the positive active material, so that deterioration of the life characteristics can be suppressed. Therefore, in the lead-acid battery, it can be said that it is more preferable that the specific condition regarding the positive active material is satisfied, and that the total pore volume per unit mass of the positive active material is 0.100 $cm^3$/g or more and 0.152 $cm^3$/g or less. In the samples S6 to S10 and S19 to S22, as compared to the samples S2 and S3 which were advantageous in life characteristics because the total pore volume of the positive active material was relatively small, equivalent or better life characteristics were obtained. The reason for this is not clear, but it is novel finding that, by using, as the positive electrode fibers, fibers whose average specific surface area measured by the BET method using krypton gas as an adsorption gas is 0.25 $m^2$/g or more, even in the numerical range of the total pore volume of the positive active material like the samples S6 to S10 and S19 to S22, it is possible to obtain the life characteristics equivalent to or better than those in a configuration in which the total pore volume of the positive active material is smaller.

Among these samples S6 to S10 and S19 to S22, in the samples S9, S10, S21, and S22, the total pore volume per unit mass of the positive active material is 0.142 $cm^3$/g or more and 0.152 $cm^3$/g or less. In all these samples, in the evaluation of the life characteristics, a better result was obtained such that the value was "190" or more, and in the evaluation of the capacity characteristics, a very good result was obtained such that the value was "114" or more. According to this result, it can be said that in the lead-acid battery, if the above-described specific condition regarding the positive active material is satisfied, and the total pore volume per unit mass of the positive active material is 0.142 $cm^3$/g or more and 0.152 $cm^3$/g or less, since the reduction in the reactivity of the positive active material can be very effectively suppressed, it is possible to very effectively improve the capacity characteristics of the lead-acid battery while effectively preventing the positive active material (positive electrode material) from falling off from the positive electrode current collector in the positive electrode plate. Therefore, in the lead-acid battery, it can be said that it is still more preferable that the specific condition regarding the positive active material is satisfied, and that the total pore volume per unit mass of the positive active material is 0.142 $cm^3$/g or more and 0.152 $cm^3$/g or less.

In this performance evaluation, among the samples S1 to S3, S6 to S11, S16 to S22, S25, and S26 with good results, in the samples S19 to S22, S25, and S26, the average specific surface area of the positive electrode fibers measured by the BET method using krypton gas as an adsorption gas is as very large as 0.50 $m^2$/g or more. In all these samples, in the evaluation of the life characteristics, a very good result was obtained such that the value was "225" or more, and in the evaluation of the capacity characteristics, a good result was obtained such that the value was "98" or more. In these samples, it is considered that since the average specific surface area of the positive electrode fibers is excessively large, the positive electrode fiber adheres very well to other components in the positive active material, and the restraining force of the positive active material by the positive electrode fiber extremely increases, so that the positive active material is very effectively prevented from falling off from the current collector, and the life characteristics are extremely improved. According to this result, it can be said that if the lead-acid battery satisfies the above-described specific condition regarding the positive active material, and the average specific surface area of the positive electrode fibers measured by the BET method using krypton gas as an adsorption gas is 0.50 $m^2/g$ or more, it is possible to very effectively prevent the positive active material (positive electrode material) from falling off from the positive electrode current collector in the positive electrode plate and to dramatically improve the life characteristics of the lead-acid battery. Therefore, in the lead-acid battery, it can be said that it is more preferable that the specific condition regarding the positive active material is satisfied, and that the average specific surface area of the positive electrode fibers measured by the BET method using krypton gas as an adsorption gas is 0.50 $m^2/g$ or more.

In the samples S1 to S3, S6 to S11, S16 to S22, S25, and S26 whose results were good in all evaluation items, acrylic fibers were used as the positive electrode fibers. If an acrylic fiber is used as the positive electrode fiber, fibers whose average specific surface area measured by the BET method using krypton gas as an adsorption gas is 0.25 $m^2/g$ or more can be easily obtained.

In the samples S1 to S3, S6 to S11, S16 to S22, S25, and S26 whose results were good in all evaluation items, although acrylic fiber was used as the positive electrode fiber, even when other fibers (polypropylene fiber, polyester fiber, polyethylene fiber, PET fiber, rayon fiber) were used as the positive electrode fiber, if the positive active material containing the positive electrode fiber satisfies the above-described specific condition regarding the positive active material, similarly it is strongly presumed that it is possible to effectively prevent the positive active material (positive electrode material) from falling off from the positive electrode current collector in the positive electrode plate and to dramatically improve the life characteristics of the lead-acid battery.

B. Modifications:

The technique disclosed in the present specification is not limited to the above embodiment. The scope of protection is defined by the appended claims.

The configuration of the lead-acid battery 100 in the above embodiment is merely an example, and can be variously modified. For example, in the above embodiment, although the acrylic fiber, the polypropylene fiber, the polyester fiber, the polyethylene fiber, the PET fiber, and the rayon fiber are exemplified as the positive electrode fiber 217, the positive electrode fiber 217 may be another type of fiber as long as the average specific surface area measured by the BET method using krypton gas as an adsorption gas is 0.25 $m^2/g$ or more.

In the lead-acid battery 100 in the above embodiment, the negative active material 226 constituting the negative electrode plate 220 may satisfy the same condition as the above-described specific condition regarding the positive active material.

The method of producing the lead-acid battery 100 in the above embodiment is merely an example, and can be variously modified.

DESCRIPTION OF REFERENCE SIGNS

    10: Housing
    12: Container
    14: Lid
    16: Cell chamber
    18: Electrolyte solution
    20: Electrode plate group
    30: Positive electrode-side terminal portion
    32: Positive electrode-side bushing
    34: Positive electrode pole
    40: Negative electrode-side terminal portion
    42: Negative electrode-side bushing
    44: Negative electrode pole
    52: Positive electrode-side strap
    54: Negative electrode-side strap
    56: Connecting member
    58: Partition
    100: Lead-acid battery
    210: Positive electrode plate
    212: Positive electrode current collector
    214: Positive electrode lug portion
    216: Positive active material
    217: Positive electrode fiber
    220: Negative electrode plate
    222: Negative electrode current collector
    224: Negative electrode lug portion
    226: Negative active material
    227: Negative electrode fiber
    230: Separator

**Claims**

1. A lead-acid battery comprising:

    a positive electrode plate having a current collector and a positive electrode material supported by the current collector; and
    a negative electrode plate,
    wherein a total pore volume per unit mass of the positive electrode material measured by mercury porosimetry is 0.167 $cm^3/g$ or less,
    the positive electrode material contains a fiber, and

an average specific surface area of the fiber measured by a BET method using krypton gas as an adsorption gas is 0.25 m$^2$/g or more.

2. The lead-acid battery according to claim 1, wherein the total pore volume per unit mass of the positive electrode material measured by mercury porosimetry is 0.100 cm$^3$/g or more and 0.152 cm$^3$/g or less.

3. The lead-acid battery according to claim 2, wherein the total pore volume per unit mass of the positive electrode material measured by mercury porosimetry is 0.142 cm$^3$/g or more and 0.152 cm$^3$/g or less.

4. The lead-acid battery according to any one of claims 1 to 3, wherein the average specific surface area of the fiber measured by the BET method using krypton gas as an adsorption gas is 0.50 m$^2$/g or more.

5. The lead-acid battery according to any one of claims 1 to 4, wherein the fiber is an acrylic fiber.

6. The lead-acid battery according to any one of claims 1 to 5, wherein the average specific surface area of the fiber measured by the BET method using krypton gas as an adsorption gas is 0.60 m$^2$/g or less.

**Patentansprüche**

1. Bleiakkumulator, umfassend:

eine Positivelektrodenplatte mit einem Stromkollektor und
einem Positivelektrodenmaterial, das der Stromkollektor trägt; und
eine Negativelektrodenplatte,
wobei ein mittels Quecksilberporosimetrie ermitteltes Gesamtporenvolumen pro Masseeinheit des Positivelektrodenmaterials maximal 0,167 cm$^3$/g beträgt, das Positivelektrodenmaterial eine Faser enthält und
eine mit einem BET-Verfahren unter Verwendung von Kryptongas als Adsorptionsgas ermittelte durchschnittliche spezifische Oberfläche der Faser mindestens 0,25 m$^2$/g beträgt.

2. Bleiakkumulator nach Anspruch 1, wobei das mittels Quecksilberporosimetrie ermittelte Gesamtporenvolumen pro Masseeinheit des Positivelektrodenmaterials mindestens 0,100 cm$^3$/g und höchstens 0,152 cm$^3$/g beträgt.

3. Bleiakkumulator nach Anspruch 2, wobei das mittels Quecksilberporosimetrie ermittelte Gesamtporenvolumen pro Masseeinheit des Positivelektrodenmaterials mindestens 0,142 cm$^3$/g und höchstens

0,152 cm$^3$/g beträgt.

4. Bleiakkumulator nach einem der Ansprüche 1 bis 3, wobei die mit dem BET-Verfahren unter Verwendung von Kryptongas als Adsorptionsgas ermittelte durchschnittliche spezifische Oberfläche der Faser mindestens 0,50 m$^2$/g beträgt.

5. Bleiakkumulator nach einem der Ansprüche 1 bis 4, wobei die Faser eine Acrylfaser ist.

6. Bleiakkumulator nach einem der Ansprüche 1 bis 5, wobei die mit dem BET-Verfahren unter Verwendung von Kryptongas als Adsorptionsgas ermittelte durchschnittliche spezifische Oberfläche der Faser mindestens 0,60 m$^2$/g beträgt.

**Revendications**

1. Batterie au plomb comprenant :

une plaque d'électrode positive ayant un collecteur de courant et un matériau d'électrode positive supporté par le collecteur de courant ; et
une plaque d'électrode négative,
un volume de pore total par unité de masse du matériau d'électrode positive mesuré par porosimétrie au mercure étant de 0,167 cm$^3$/g ou moins,
le matériau d'électrode positive contient une fibre et
une surface spécifique moyenne de la fibre mesurée par un procédé BET en utilisant du gaz krypton comme gaz d'adsorption est de 0,25 m$^2$/g ou plus.

2. Batterie au plomb selon la revendication 1, dans laquelle le volume de pore total par unité de masse du matériau d'électrode positive mesuré par porosimétrie au mercure est de 0,100 cm$^3$/g ou plus et de 0,152 cm$^3$/g ou moins.

3. Batterie au plomb selon la revendication 2, dans laquelle le volume de pore total par unité de masse mesuré par porosimétrie au mercure est de 0,142 cm$^3$/g ou plus et de 0,152 cm$^3$/g ou moins.

4. Batterie au plomb selon l'une quelconque des revendications 1 à 3, dans laquelle la surface spécifique moyenne de la fibre mesurée par le procédé BET en utilisant du gaz krypton comme gaz d'adsorption est de 0,50 m$^2$/g ou plus.

5. Batterie au plomb selon l'une quelconque des revendications 1 à 4, dans laquelle la fibre est une fibre acrylique.

**6.** Batterie au plomb selon l'une quelconque des revendications 1 à 5, dans laquelle la surface spécifique moyenne de la fibre mesurée par le procédé BET en utilisant du gaz krypton comme gaz d'adsorption est de 0,60 m$^2$/g ou moins.

Fig. 1

Fig. 2

Fig. 3

Fig. 4

| | Total pore volume of positive active material (cm³/g) | Krypton BET average specific surface area of positive electrode fiber (m²/g) | Average diameter of positive electrode fiber (μm) | Aspect ratio of positive electrode fiber | Life characteristics | Capacity characteristics |
|---|---|---|---|---|---|---|
| S1 | 0.040 | 0.40 | 16.7 | 180 | 190 | 45 |
| S2 | 0.050 | 0.40 | 16.7 | 180 | 190 | 88 |
| S3 | 0.078 | 0.40 | 16.7 | 180 | 192 | 97 |
| S4 | 0.106 | 0.18 | 20.4 | 147 | 115 | 99 |
| S5 | 0.106 | 0.20 | 13.3 | 225 | 100 | 100 |
| S6 | 0.106 | 0.25 | 16.7 | 30 | 194 | 101 |
| S7 | 0.106 | 0.33 | 16.7 | 180 | 192 | 99 |
| S8 | 0.106 | 0.40 | 16.7 | 400 | 195 | 100 |
| S9 | 0.142 | 0.40 | 16.7 | 180 | 192 | 114 |
| S10 | 0.152 | 0.40 | 16.7 | 180 | 190 | 120 |
| S11 | 0.167 | 0.40 | 16.7 | 180 | 160 | 119 |
| S12 | 0.178 | 0.40 | 16.7 | 180 | 100 | 122 |
| S13 | 0.106 | (Negative electrode) 0.25 | (Negative electrode) 16.7 | (Negative electrode) 30 | 102 | 101 |
| S14 | 0.106 | (Negative electrode) 0.33 | (Negative electrode) 16.7 | (Negative electrode) 180 | 100 | 98 |
| S15 | 0.106 | (Negative electrode) 0.40 | (Negative electrode) 16.7 | (Negative electrode) 400 | 105 | 100 |
| S16 | 0.106 | (Both electrodes) 0.25 | (Both electrodes) 16.7 | (Both electrodes) 30 | 190 | 102 |
| S17 | 0.106 | (Both electrodes) 0.33 | (Both electrodes) 16.7 | (Both electrodes) 180 | 192 | 101 |
| S18 | 0.106 | (Both electrodes) 0.40 | (Both electrodes) 16.7 | (Both electrodes) 400 | 188 | 99 |

Fig. 5

| | Total pore volume of positive active material (cm³/g) | Krypton BET average specific surface area of positive electrode fiber (m²/g) | Average diameter of positive electrode fiber (µm) | Aspect ratio of positive electrode fiber | Life characteristics | Capacity characteristics |
|---|---|---|---|---|---|---|
| S19 | 0.106 | 0.50 | 16.7 | 180 | 225 | 100 |
| S20 | 0.106 | 0.60 | 20.3 | 147 | 242 | 98 |
| S21 | 0.152 | 0.50 | 16.7 | 180 | 225 | 119 |
| S22 | 0.152 | 0.60 | 20.3 | 147 | 240 | 121 |
| S23 | 0.106 | (Negative electrode) 0.50 | (Negative electrode) 16.7 | (Negative electrode) 180 | 102 | 100 |
| S24 | 0.106 | (Negative electrode) 0.60 | (Negative electrode) 20.3 | (Negative electrode) 147 | 104 | 100 |
| S25 | 0.106 | (Both electrodes) 0.50 | (Both electrodes) 16.7 | (Both electrodes) 180 | 227 | 99 |
| S26 | 0.106 | (Both electrodes) 0.60 | (Both electrodes) 20.3 | (Both electrodes) 147 | 239 | 100 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000036305 A
- JP 2010225408 A